Europäisches Patentamt

European Patent Office

Office européen des brevets

(19)

(11) **EP 0 480 832 B1**

(12) **FASCICULE DE BREVET EUROPEEN**

(45) Date de publication et mention
de la délivrance du brevet:
**13.03.1996 Bulletin 1996/11**

(51) Int Cl.[6]: **G01S 17/02**, G01S 17/87

(21) Numéro de dépôt: **91402698.4**

(22) Date de dépôt: **09.10.1991**

(54) **Procédé et dispositif optique pour la topographie de haute précision**

Optische Verfahren und Vorrichtung für hochakkurate Topographie

Optical method and device for high accuracy topography

(84) Etats contractants désignés:
**AT BE CH DE DK ES FR GB GR IT LI LU NL SE**

(30) Priorité: **12.10.1990 FR 9012609**

(43) Date de publication de la demande:
**15.04.1992 Bulletin 1992/16**

(73) Titulaire: **INSTITUT GEOGRAPHIQUE
NATIONAL
F-75700 Paris (FR)**

(72) Inventeur: **Kasser, Michel
F-94160 Saint-Mande (FR)**

(74) Mandataire: **Keib, Gérard et al
Bouju Derambure (Bugnion) S.A.,
52 rue de Monceau
F-75008 Paris (FR)**

(56) Documents cités:
**FR-A- 2 418 938          US-A- 4 225 226**

- **IEEE TRANSACTIONS ON GEOSCIENCE AND REMOTE SENSING vol. GE-25, no. 5, Septembre 1987, NEW YORK US pages 581 - 591; S.C. COHEN ET AL.: 'The geoscience laser altimetry / ranging system'**
- **PROC. ESA WORKSHOP ON SPACE LASER APLLICATIONS AND TECHNOLOGY 26 Mars 1984,**
- **LES DIABLERETS pages 61 - 67; R. SCHWARTE: '" Performance capabilities of laser ranging sensors"'**

## Description

La présente invention concerne un procédé pour déterminer les coordonnées spatiales de points ainsi qu'un système mettant en oeuvre ce procédé. L'invention concerne aussi un dispositif optique utilisé dans ce procédé.

Le procédé a des applications notamment dans la topographie de haute précision recherchée par exemple par les exploitants de ressources du sous-sol. En effet, pour exploiter ou prospecter des gisements, des mesures précises de subsidence autour de la zone considérée sont précieuses car elles renseignement indirectement sur l'évolution du sous-sol. Ces mesures topographiques sont également utiles aux sismologues pour analyser ou prévoir les mouvements tectoniques.

Dans l'article "The Airborne Laser Ranging System, its capabilities and applications" (Tech. Memo. 83984, septembre 1982), W.D. Kahn et coll. divulguent un système de télémétrie comprenant un dispositif optique embarqué dans un avion et plusieurs rétroflecteurs disposés au sol. A partir d'un faisceau laser subdivisé, six télémètres sont formés, chacun des sous-faisceaux visant l'un des réflecteurs disposé au sol à travers un hublot ménagé dans le plancher de l'avion. L'avion dispose d'un système inertiel embarqué recalé par une aide radioélectrique (Loran C ou GPS) afin de connaître la position de l'avion permettant donc le pointé des télémètres vers les cibles, ainsi que son orientation car les six télémètres ne sont pas situés géométriquement au même endroit. Le calcul des distances à partir des temps de vol des impulsions laser est effectué en temps réel par un algorithme de filtrage de Kalman récursif, ce qui implique un vol long (plusieurs heures) et limite la précision des mesures à l'échelle centimétrique. Les applications concernées sont limitées à la mesure de la déformation des zones tectoniques sur des temps courts.

Ce système présente un coût considérable, les éléments coûteux suivants étant indispensables : système inertiel de bonne précision, calculateur de haute performance embarqué, télémètre ayant six tourelles indépendantes pour viser les cibles, logiciels de calculs, hublot de grandes dimensions présentant les qualités optiques requises. En outre la précision de ces mesures est insuffisante pour le suivi des subsidences fines liées, par exemple, à l'exploitation pétrolière, notamment à cause de sa limitation à six cibles suivies simultanément. La fiabilité du dispositif est réduite en raison des nombreux éléments mécaniques embarqués dans l'avion. La préparation de chaque vol est longue pour aligner le système inertiel et, en outre, l'avion est immobilisé longtemps pour installer l'ensemble du matériel nécessaire. Enfin l'émission en direction du sol de faisceaux laser collimatés rend ce système dangereux pour les yeux des personnes situées dans le champ de vision de l'appareil.

Le brevet français FR - A - 2 418 938 divulgue un procédé et un dispositif de détermination de position de points rétroréflecteurs grâce à la mesure des temps de vol séparant l'émission d'une impulsion laser formant un faisceau en éventail plat et la réception des impulsions réfléchies recueillies en champ large. La levée de l'ambiguité spatiale est effectuée par une analyse multifaisceaux, ce qui ne permet pas une grande précision.

Le but de l'invention est de remédier aux inconvénients ci-dessus en proposant un procédé et un système permettant de déterminer avec une très grande précision les coordonnées spatiales de points situés au sol ou dans l'espace et notamment d'en déduire l'amplitude de déformations minimes du sol en un grand nombre de points situés à sa surface sur une zone étendue tout en utilisant des densités de flux d'énergie éloignées des seuils de sécurité laser.

Un autre but du procédé selon l'invention est que ces mesures puissent être effectuées rapidement, simplement et avec un appareillage économique de façon à pouvoir les effectuer souvent en se libérant des principales contraintes des procédés connus.

L'invention fournit ainsi un procédé pour déterminer les coordonnées spatiales de points grâce à un appareillage optique constitué, d'une part, d'un dispositif optique comprenant une source laser émettant un rayonnement sous forme d'impulsions et un détecteur sensible au rayonnement issu de ladite source laser et, d'autre part, de réflecteurs placés aux dits points, le procédé comprenant la répétition des étapes suivantes :

a) émission en champ large par la source laser d'une impulsion d'un rayonnement divergent ;
b) réception en champ large des impulsions réfléchies par les différents réflecteurs ;
c) mesure des temps de vol séparant l'émission d'une impulsion de la réception par le détecteur des impulsions réfléchies.

Suivant l'invention, ce procédé est caractérisé en ce qu'il comprend en outre l'étape suivante :
d) identification des réflecteurs responsables des impulsions réfléchies grâce à la connaissance préalable de leurs positions approchées.

L'utilisation d'un faisceau laser en champ large et d'une détection des impulsions en champ large présente de nombreux avantages :

- on n'a pas besoin de viser les réflecteurs cibles ; il suffit de diriger très approximativement le faisceau divergent vers ces réflecteurs ;
- un très grand nombre de réflecteurs peuvent être atteints simultanément, ce qui permet d'obtenir à la fois un nombre supérieur de données et une précision plus importante par réduction statistique de l'incertitude ;
- la divergence du faisceau rend minime sa densité de flux d'énergie, de sorte que le procédé n'entraîne aucun danger pour les yeux ;
- l'appareillage optique est relativement simple et peu coûteux.

Dans une version préférée du procédé selon l'invention, on prélève une fraction de l'impulsion laser émise par la source laser avant de faire diverger ladite impulsion laser, pour acheminer ladite fraction vers le détecteur de façon à délivrer une référence de temps de vol. On amplifie le signal de sortie du détecteur représentatif de l'intensité lumineuse recueillie par le détecteur et on échantillonne numériquement le signal amplifié, de préférence à une fréquence d'échantillonnage numérique supérieure à 1 GHz. Suivant un mode d'exécution avantageux de l'invention, on traite le signal de sortie du détecteur, amplifié et échantillonné, pour identifier les pics dudit signal de sortie correspondant à la réflexion de l'impulsion laser sur un réflecteur et pour déterminer les temps de vol correspondant aux intervalles de temps entre ladite référence de temps de vol et l'instant d'apparition desdits pics, et on enregistre en mémoire un ensemble de valeurs représentant lesdits temps de vol.

Le procédé ci-dessus permet des mesures de très haute précision rendue possibles par le traitement numérique et l'échantillonnage à cadence élevée. On est alors en mesure de traiter en temps réel un grand nombre de données pour enregistrer les temps de vol mesurés qui peuvent être exploités dans des calculs ultérieurs pour en déduire avec précision les coordonnées spatiales des points de l'espace où sont situés le dispositif optique (par exemple pour calculer avec précision la trajectoire d'un aéronef à bord duquel le dispositif est installé) et les réflecteurs (par exemple pour calculer les subsidences dans une zone d'extraction de ressources géologiques).

Le procédé suivant l'invention réalise ainsi des mesures de temps de vol d'impulsions laser réfléchies en un grand nombre de points au sol (typiquement 100) répartis sur une zone étendue (typiquement 10 kilomètres) et de façon très rapide (quelques dizaines de minutes). La précision atteinte est inférieure au millimètre, les réalisations selon la technique antérieure de ce genre de mesures étant limitées à une précision d'échelle centimétrique.

Il faut noter que cette précision accrue est obtenue tout en réduisant la complexité et le coût des installations nécessaires.

Suivant un autre aspect de l'invention, il est fourni un dispositif pour déterminer les coordonnées spatiales de points comprenant :

- un dispositif optique incluant une source laser émettant un rayonnement sous forme impulsionnelle, un détecteur sensible au rayonnement issu de ladite source laser, et des moyens de réception, ou collecteurs de lumière, en champ large des impulsions réfléchies, disposés devant le détecteur pour lui transmettre les impulsions recueillies et des moyens optiques divergents pour faire diverger le rayonnement émis par la source laser;
- des réflecteurs réfléchissant les impulsions émises ;
- des moyens de traitement du signal de sortie du détecteur comprenant des moyens de mesure des temps de vol séparant l'émission d'une impulsion de la réception par le détecteur des impulsions réfléchies.

Ce dispositif selon l'invention est caractérisé en ce qu'il comporte en outre des moyens d'identification des réflecteurs responsables des impulsions réfléchies grâce à la connaissance préalable de leurs positions approchées.

Ce système met en oeuvre le procédé selon l'invention, répondant ainsi aux buts fixés pour la présente invention.

D'autre particularités et avantages de cette invention apparaîtront à la lecture de la description ci-après.

Aux dessins annexés, donnés à titre d'exemples non limitatifs :

- la figure 1 illustre une prise de mesures conformément au procédé selon l'invention ;
- la figure 2 représente schématiquement le matériel embarqué pour ces mesures ;
- la figure 3 représente la structure de support des réflecteurs au sol ;
- la figure 4 montre, à plus petite échelle, un détail de la figure 3 ;
- les figures 5 et 6 illustrent des composants optiques du dispositif optique selon l'invention ;
- la figure 7 est un schéma de l'électronique de traitement de signal utilisée dans l'invention ;
- les figures 8 et 9 sont des schémas synoptiques illustrant des étapes du procédé selon l'invention ;
- la figure 10 est un graphique montrant un enregistrement typique par le détecteur ; et
- la figure 11 illustre graphiquement la procédure d'échantillonnage du signal de sortie du détecteur.

Dans la description détaillée ci-dessous, le procédé de mesure et le système utilisés sont décrits dans leur application préférée à la topographie de haute précision. Mais il apparaîtra clairement à l'homme du métier qu'ils peuvent être utilisés dans de nombreuses circonstances où on recherche des déterminations précises des coordonnées spatiales de points éloignés.

Le système effectue des mesures de type télémétrique au moyen d'un appareillage optique. Cet appareillage optique définit des trajets de lumière le long desquels se propagent de brèves impulsions lumineuses dont on mesure les temps de vol pour en déduire la longueur desdits trajets de lumière qui est liée aux coordonnées spatiales des éléments de l'appareillage optique qui les définissent.

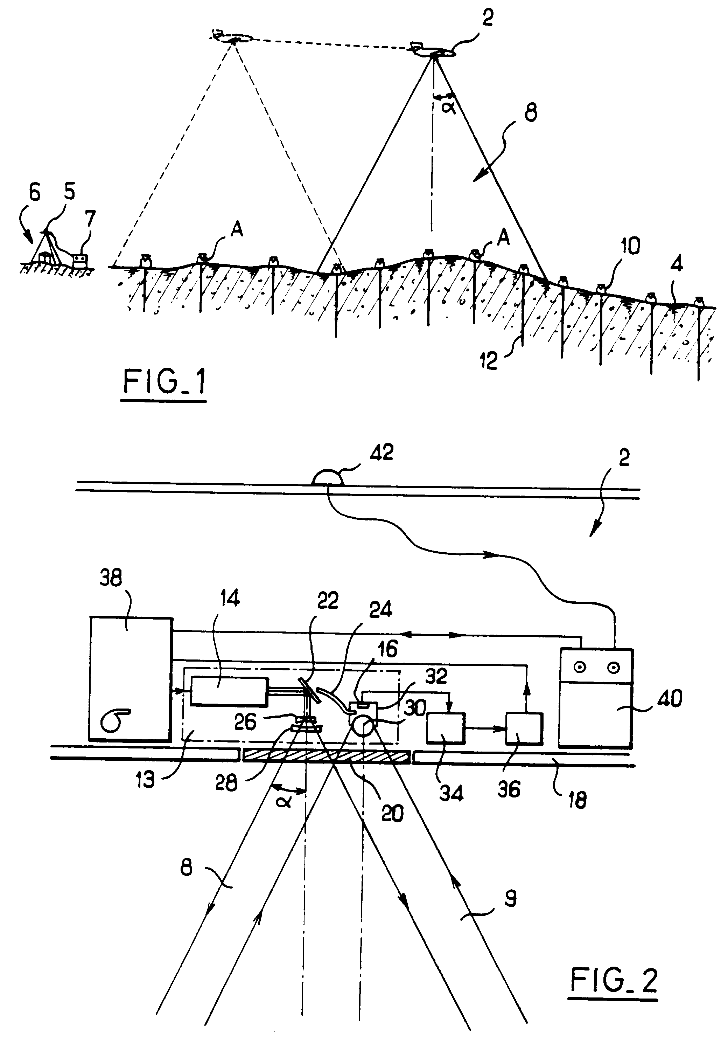

En référence aux figures 1 et 2, l'appareillage optique comprend, d'une part un dispositif optique 13 embarqué à bord d'un avion 2 et, d'autre part, des réflecteurs 10 répartis à la surface du sol 4 dont on veut mesurer les subsidences. Pour les applications liées à la prospection et à l'exploitation de ressources géologiques, on place les réflecteurs 10 dans et autour de la zone située à la verticale du gisement.

Le dispositif optique 13 embarque constitue un dispositif de type télémètre laser à impulsions.

Il comprend une source laser 14 et un détecteur 16 sensible au rayonnement émis par la source laser 14 et réfléchi par les réflecteurs 10 disposés au sol. La chronométrie du signal de sortie de détecteur 16 est exploitée pour déduire le temps de vol d'impulsions laser suivant un trajet optique allant de la source 14 à un réflecteur 10 pour revenir au détecteur 16.

La source laser 14 fonctionne en impulsions d'énergie élevée et de courte durée, de préférence inférieure à 50 ns pour des mesures de haute précision. Une diode laser ou un laser à solide peuvent ainsi être utilisés. Dans l'exemple particulier ci-dessous détaillé, la source 14 est un laser à grenat d'yttrium et d'aluminium (YAG) déclenché délivrant des impulsions laser de durée 15 ns, de longueur d'onde 1064 nm et d'énergie 100 mJ à une cadence de 10 Hz.

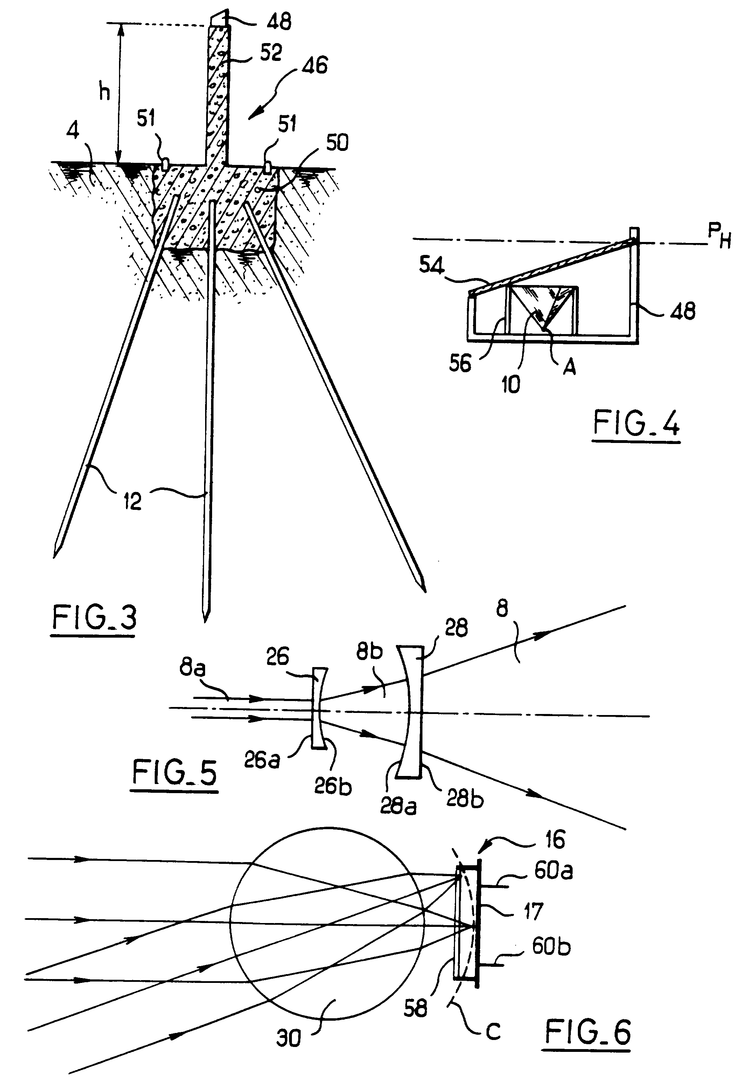

Les impulsions lumineuses produites par la source 14 sont dirigées vers un miroir diélectrique 22 traité pour réfléchir le rayonnement à haute énergie avec un bon rendement (environ 99,9 %). Le miroir 22 réfléchit l'impulsion en direction d'une optique divergentee 26, 28. Cette optique divergente, représentée de façon plus détaillée à la figure 5, comprend deux lentilles plan-concave 26, 28 montées en série le long du faisceau lumineux. Le faisceau 8a réfléchi par le miroir 22 traverse d'abord la lentille 26, en pénétrant par sa face plane 26a et en sortant par sa face concave 26b, sous forme d'un faisceau divergent 8b. Ce faisceau 8b traverse ensuite la seconde lentille 28, dont le diamètre est supérieur à celui de la première lentille 26, en pénétrant par sa face concave 28a et en sortant par sa face plane 28b sous forme d'un faisceau de sortie divergent 8.

Comme illustré aux figures 1 et 2, ce faisceau divergent 8 est dirigé sensiblement dans la direction du nadir en traversant un hublot 20 prévu dans le plancher 18 de l'avion 2. Le hublot 20 peut être de dimension réduite (20cm) mais, du point de vue optique, doit constituer une lame à faces parallèles, Le hublot 20 peut être formé à partir d'un matériau de la qualité optique d'un verre à vitre. Son épaisseur est choisie en fonction de la pressurisation de l'avion. Le champ angulaire du faisceau divergent 8 est suffisant pour que plusieurs réflecteurs 10 au sol puissent recevoir le rayonnement divergent. Le demi-angle au sommet $\alpha$ du cône correspondant au champ du faisceau divergent vaut de préférence entre 5° et 35° selon l'altitude de l'avion 2 et la répartition des réflecteurs 10 au sol 4. Le dimensionnement des lentilles formant l'optique divergente est un problème d'optique banal pour l'homme du métier. Pour de faibles angles de divergence, la seconde lentille 28 peut être superflue alors que, pour un grand angle de divergence, il peut être nécessaire d'ajouter une troisième lentille (par exemple une lentille ménisque). Bien entendu, d'autres configurations et d'autres types de lentilles peuvent fournir la divergence souhaitée.

Les réflecteurs 10 et leurs structures de support 46 sont représentées sur les vues en coupe en élévation des figures 3 et 4. Le réflecteur 10 a, de préférence, la forme bien connue d'un coin de cube ayant par exemple un diamètre de 6 cm. On connaît les caractéristiques optiques de ce type de réflecteur :

- le faisceau réfléchi est rigoureusement parallèle au faisceau incident, quelle que soit l'incidence ;
- la longueur du chemin optique parcouru par un rayon réfléchi quelconque est égale à celle d'un rayon heurtant la surface d'onde passant par le sommet A du coin de cube.

En conséquence, le point géométrique définissant le point de rebroussement du faisceau divergent réfléchi 8 est le sommet A du coin de cube 10.

Le coin de cube 10 est monté sur une structure de support 46, avec son côte ouvert orienté approximativement vers le zénith. Dans l'exemple illustré aux figures 3 et 4, chaque structure de support 46 d'un réflecteur 10 réalise un ancrage profond dans le sol 4, obtenu en enfonçant à refus dans le sol 4 plusieurs tiges en acier 12 de forte section (par exemple rails de chemin de fer, tubes de conduits de vapeur ou analogue).

Ces tiges 12 sont ensuite reliées entre elles dans un bloc cubique 50 de béton armé de 1 m³ environ, ne dépassant pas le sol 4 et sur lequel sont installés quatre repères 51 à tête hémisphérique en laiton à 20 cm de chaque angle du bloc 50, dont le nivellement permettra de détecter un éventuel basculement d'ensemble.

Au centre du bloc 50, un pilier 52 en béton armé de 30 cm de diamètre s'élève à une hauteur $\underline{h}$ de deux mètres typiquement. A son sommet, est fixé un logement 48 pour le dispositif rétro-réflecteur, composé du coin de cube 10 protégé par une vitre en verre 54 à faces parallèles traitée anti-reflets inclinées de 20° environ par rapport à un plan horizontal $P_H$ afin d'éviter la stagnation de gouttelettes d'eau après les pluies ou la venue de rosée matinale (voir figure 4).

Le coin de cube 10 est orienté vers le zénith et soutenu par des pieds 56 dans son logement 48.

La lumière réfléchie par les coins de cube 10 remonte vers l'avion 2 et traverse à nouveau le hublot 20. L'optique de réception du dispositif optique 13 comprend une lentille sphérique 30 qui constitue un collecteur de lumière en champ large 9. La lentille sphérique 30, par exemple d'un diamètre de 8 mm, est de préférence placée aussi près que possible de l'optique divergente 26, 28 de façon à recueillir une quantité de lumière significative.

Comme illustré à la figure 2, la moitié arrière de la lentille sphérique 30 est située dans un boîtier opaque 32 au fond duquel est placé le détecteur 16 du dispositif optique 13. Le détecteur 16 est une photodiode PIN ayant une surface sensible relativement grande de préférence supérieure à 10 mm². Ce type de composant opto-électronique à semi-conducteurs est bien connu de l'homme du métier. On peut, à titre d'exemple, utiliser la photodiode PIN modèle 30810, commercialisée par la Société RCA, dont la surface sensible vaut environ 100 mm². 

Le positionnement relatif du collecteur de lumière en champ large 30 et du détecteur 16 est illustré à la figure 6. La surface focale C de la lentille sphérique 30 est également sphérique, avec le même centre géométrique que la lentille sphérique 30 et un diamètre égal à 1,5 fois celui de la lentille sphérique 30. On place donc de préférence la surface sensible 17 de la photodiode 16 de façon qu'elle soit sensiblement tangente à la sphère focale C de la lentille 30. Cette configuration permet d'optimiser la puissance lumineuse détectée et la largeur angulaire du champ de réception 9 du dispositif optique 13. Comme on le voit à la figure 6, les rayons lumineux recueillis traversent la lentille sphérique 30 et sont défléchis vers la surface sensible 17 de la diode 16 en traversant sa fenêtre 58.

A la figure 2, on voit que le dispositif optique 13 comprend également un segment de fibre optique 24 qui s'étend entre le côte arrière du miroir diélectrique 22 et le détecteur 16 à l'intérieur du boîtier 32. Le segment de fibre optique 24 est ainsi placé pour prélever une partie du rayonnement correspondant à la (faible) perte en transmission du miroir 22 et pour l'acheminer vers le détecteur 16. Comme il sera expliqué plus loin, cette fraction de rayonnement sert de référence pour la mesure des temps de vol des impulsions laser réfléchies. Bien entendu, l'utilisation d'un segment de fibre optique 24 pour délivrer une référence de temps de vol peut être remplacée par toute configuration fournissant un résultat équivalent.

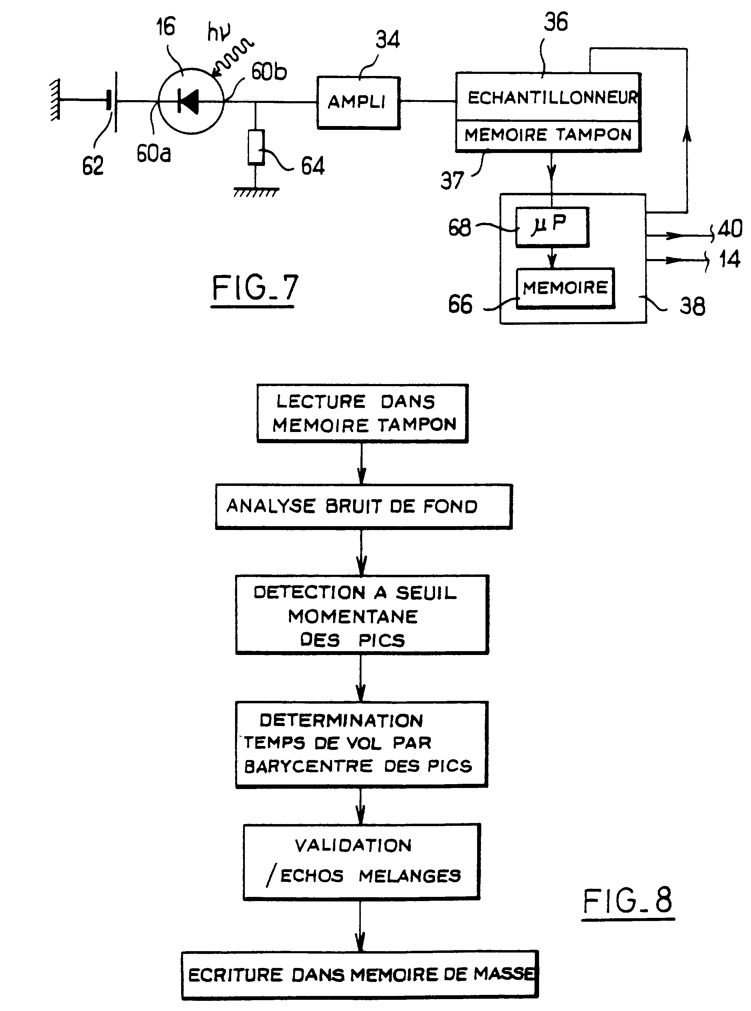

Le signal lumineux détecté par la photodiode PIN 16 est traité par des moyens de traitement du signal illustrés aux figures 2 et 7. Le montage électrique de la photodiode PIN 16 est représenté sur la partie gauche de la figure 7. La diode PIN 16 est alimentée en polarisation inverse par une alimentation électrique continue 62 délivrant par exemple une tension de 50 volts. La borne négative de l'alimentation 62 est reliée à la masse et sa borne positive est reliée à la broche 60a de la photodiode PIN 16, qui est connectée à la région dopée n de la photodiode 16. L'éclairement de la région intrinsèque sensible de la diode PIN engendre un courant électrique proportionnel à l'intensité lumineuse recueillie.

Ce courant électrique est fourni à la seconde broche 60b de la photodiode PIN 16 qui est reliée à la région dopée P de la photodiode 16. Le connecteur 60b est relié à l'entrée d'un amplificateur 34. Pour transformer le signal de courant en signal de tension, une résistance de charge 64, par exemple de 150 $\Omega$, est montée entre le connecteur 60b et la masse, c'est-à-dire en parallèle de la branche de circuit comprenant l'alimentation 62 et la diode 16.

L'amplificateur 34 à une bande passante dont la limite supérieure est de préférence inférieure à 50 MHz, par exemple égale à 20 MHz. Son gain est prévu pour qu'il amplifie des signaux de tension de l'ordre de la centaine de microvolts pour fournir, en sortie, des signaux de tension de l'ordre de quelques volts. Ces signaux analogiques de sortie sont fournis à l'entrée d'un échantillonneur numérique 36.

L'échantillonneur numérique 36, comprenant une horloge et un convertisseur analogique/numérique internes, transforme le signal analogique qui lui est fourni en entrée en signaux numériques représentant des données d'histogrammes codées sur 8 bits obtenues par échantillonnage du signal. Ces données d'histogrammes sont alors mises en mémoire dans une mémoire tampon 37. La fréquence d'échantillonnage numérique est très élevée, de préférence supérieure à 1 GHz. Un exemple d'échantillonneur numérique 36 pouvant être utilisé dans le cadre de l'invention est l'échantillonneur modèle 6880, commercialisé par la Société LE CROY ou l'oscilloscope numérique modèle 7200 commercialisé par la Société LE CROY, ces deux échantillonneurs ayant une mémoire tampon 37 incorporée. Les fréquences d'échantillonnage de ces dispositifs sont respectivement de 1,3 et de 1,4 GHz avec un codage sur 8 bits. L'échantillonneur 36 est commandé par un signal synchronisé de début d'échantillonnage délivré par une unité de commande 38.

Un microprocesseur 68 est prévu pour lire les données d'histogramme inscrites dans la mémoire tampon 37 et pour effectuer des prétraitements numériques, qui seront détaillés plus loin, de façon à calculer des temps de vol d'impulsions détectées par la photodiode 16. Ces valeurs de temps de vol sont ensuite inscrites dans une mémoire de stockage 66 pour qu'elles puissent être lues ultérieurement pour effectuer d'autres traitements. Dans un exemple de réalisation de l'invention, le microprocesseur 68 (par exemple un microprocesseur modèle 68030 commercialisé par la Société MOTOROLA) et la mémoire de stockage 66 font partie d'un microordinateur 38 constituant l'unité de commande et de stockage de données du système de mesure selon l'invention. Cette unité 38 délivre des signaux commandant l'émission d'impulsions par la source laser 14 du dispositif optique 13 et des signaux de commande synchronisés qui initialisent les cycles d'échantillonnage par l'échantillonneur 36.

Le système selon l'invention comporte en outre des moyens de positionnement approché de l'avion 2 et du dispositif optique 13.

Dans l'avion 2 est installé à cet effet un récepteur de radio-positionnement 40 permettant de repérer (au besoin a posteriori) la position de l'avion 2 à chaque instant où on le souhaite. Le système radio-électrique GPS (de "Global Positioning System" : système de positionnement global), bien connu de l'homme du métier, convient en particulier. Il faut alors recevoir au minimun les émissions radio simultanées de quatre satellites, non représentés, à la fois dans l'avion 2 et en un point 6 au sol de coordonnées spatiales connues (qui peut être distant de la zone de mesure de plusieurs centaines de kilomètres), avec deux récepteurs respectifs 40, 7 reliés à des antennes de réception radio respectives 42, 5, ces récepteurs 40, 7 étant capables de procéder à des mesures à cadence élevée (au moins une par seconde). On peut aussi employer le système SYLEDIS de la Société SERCEL, ou le système TRIDENT de la Société THOMSON, ou tout autre moyen de positionnement utilisant des balises terrestres permettant d'accéder à une précision de l'ordre du mètre pour la position de l'antenne 42 de l'avion 2.

Si l'altitude de l'avion 2 est mal déterminée, on peut alors aussi la mesurer avec un altimètre mesurant la pression statique hors de l'avion 2.

Ce positionnement approché de l'avion 2 et du dispositif optique 13 est calculé pour tous les instants où une impulsion est émise par la source laser 14, de sorte qu'au retour de mission, on connaît la position de l'antenne 42 pour chaque tir du laser. Par ailleurs, l'antenne 42 sera placée sur l'avion 2 à proximité de la verticale du dispositif optique 13, afin d'éviter d'avoir à mesurer aussi l'orientation de l'avion 2 pour ramener la position de l'antenne 42 à celle du dispositif optique 13.

Le récepteur radio-électrique 40 est également commandé par un signal synchronisé issu du micro-ordinateur 38 pour que les instants de mesure approchée de la position de l'avion 2 coïncident avec les instants d'émission des impulsions lumineuses par la source laser 14.

Conformément aux procédé selon l'invention, on fait fonctionner le système de mesure décrit ci-dessus et son dispositif optique 13 de la façon suivante :

Le micro-ordinateur 38 déclenche l'émission d'une impulsion laser par la source laser 14 et, simultanément une mesure approchée de la position de l'avion par le récepteur GPS 40. Le signal du récepteur GPS 40 indicatif de la position de l'avion 2 et du dispositif optique 13 à l'instant d'émission de l'impulsion laser est alors enregistré dans la mémoire 66.

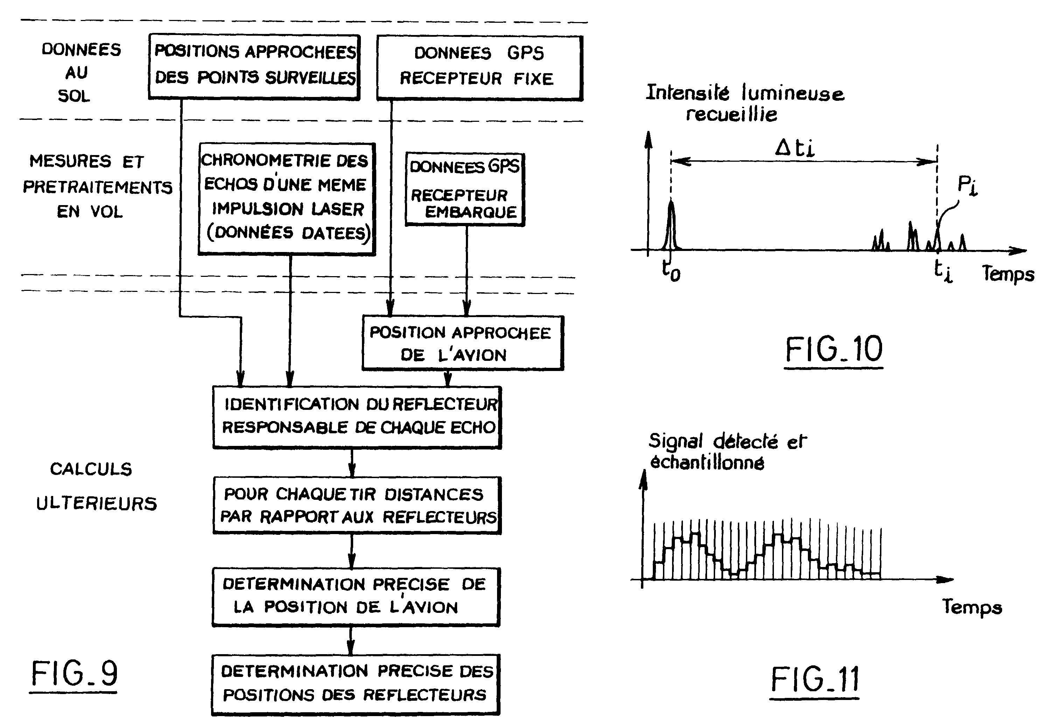

L'impulsion émise par la source laser 14 est rendue divergente par l'optique divergente 26, 28 après qu'une fraction de cette impulsion a été prélevée à l'arrière du miroir 22. De façon connue, l'intensité lumineuse de cette fraction prélevée et acheminée vers le détecteur 16 par le segment de fibre optique 24 est réglée en modifiant la position de l'extrémité du segment 24 par rapport à la face arrière du miroir 22. Cette fraction prélevée de l'impulsion laser est adressée au détecteur 16 pour fournir une référence de temps de vol $t_o$ sous forme d'un premier pic de l'intensité lumineuse détectée par le détecteur 16 (voir figure 10).

Les réflecteurs 10 situés dans le champ élargi de l'impulsion laser rétrodiffusent cette impulsion incidente en direction du dispositif optique 13. L'optique de réception en champ large du dispositif optique 13 permet de recueillir chacune des impulsions réfléchies qui produisent des pics $P_i$ de l'intensité détectée. Chaque pic $P_i$ survient à un intant $t_i$ et la durée $\Delta t_i = t_i - t_o$ entre cet instant $t_i$ et la référence de vol $t_o$ représente le temps de vol de l'impulsion réfléchie, proportionnel à la longueur du trajet optique allant du miroir 22 au sommet A du coin de cube 10 correspondant puis revenant jusqu'à la zone sensible du détecteur 16 moins la longueur du trajet optique de la fraction de référence le long de la fibre optique 24, la constante de proportionnalité étant l'inverse de la vitesse de la lumière.

Le photodiode 16 transforme les impulsions lumineuses en signal d'intensité électrique proportionnel. La résistance de charge 64 change ce signal d'intensité en signal de tension, amplifié par l'amplificateur 34. Les pics du signal de sortie de l'amplificateur 34 sont élargis temporellement par rapport aux impulsions lumineuses recueillies, dont la largeur temporelle est sensiblement égale à la durée des impulsions du laser 14, soit 15 ns dans l'exemple décrit. Cet élargissement résulte d'une intégration par l'amplificateur 34 et également par le circuit RC forme par la résistance de charge 64 et par la capacité résiduelle de la photodiode PIN 16 (d'environ 70 pF dans l'exemple décrit). Cette intégration, qui fournit des pics amplifiés de largeur 30 à 40 ns, et la bande passante relativement étroite de l'amplificateur 34, éliminent une partie du bruit indésirable du détecteur 16 (dû par exemple à la production thermique de paires électron-trou dans la zone intrinsèque de la diode PIN) sans nuire à la précision de mesure des instants $t_i$ car ces instants $t_i$ représentent essentiellement les centres de gravité des pics $P_i$ qui ne sont pas décalés par l'intégration.

L'échantillonneur numérique à grande vitesse 36 transforme le signal analogique amplifié en un signal numérique représentant des données d'histogrammes illustrées schématiquement à la figure 11 dans laquelle l'échelle de temps en abscisses est plus petite que celle du graphique de la figure 10. La durée d'un canal d'échantillonnage est inférieure à 1 ns, permettant ainsi des mesures très précises de la position $t_i$ des centres de pics.

Après avoir transité dans la mémoire tampon 37, les données d'histogramme sont lues par le microprocesseur 68 qui effectue les prétraitements numériques illustrés par le diagramme synoptique de la figure 8. Un programme approprié est chargé dans le microprocesseur 8. Ce programme effectue des calculs rapides de type connu pour déduire la valeur des temps de vol $\Delta t_i$ à partir des données d'histogramme. Il analyse d'abord le bruit de fond du signal numérique par une technique du type moyenne glissante pour en déduire un seuil momentané de détection. Lorsque le signal numérique dépasse ce seuil pendant un nombre prédéterminé de canaux, le programme considère qu'il a identifie une impulsion réfléchie. Il calcule alors le barycentre de chaque pic représentant une impulsion réfléchie, qui est égal à l'intant $t_i$ représentatif du pic $P_i$ considéré. Il retranche alors la valeur $t_o$ du barycentre du pic de référence pour en déduire le temps de vol $\Delta t_i = t_i - t_o$ de cette impulsion. Après une étape de validation, il inscrit dans la mémoire de stockage 66 un ensemble de valeurs représentant ces temps de vol $\Delta t_i$. L'étape de validation a pour but de vérifier qu'un pic identifié ne correspond pas au chevauchement de plusieurs impulsions ayant parcouru des trajets optiques de longueurs très proches. A cet effet, le programme du microprocesseur 68 vérifie que la largeur des pics qu'il a identifiés ne dépasse pas un seuil de largeur prédéterminé, légèrement supérieur à la largeur théorique d'un pic unique, égale à la durée de l'impulsion laser émise par la source 14 augmentée des constantes de temps d'intégration du circuit de détection et d'amplification. Les pics dépassant ledit seuil de largeur sont exclus du traitement. Cette procédure de validation est satisfaisante car la probabilité pour que deux impulsions soient tellement proches qu'elles forment un pic unique de largeur inférieure au seuil est négligeable.

Il est à noter que l'ensemble du traitement du signal de sortie du détecteur 16 et l'enregistrement en mémoire 66 sont effectués à une vitesse suffisante (grâce à l'utilisation d'un microprocesseur rapide) pour qu'ils soient compris dans la période séparant deux émissions successives d'impulsions laser par la source 14, soit 0,1 s dans le cas décrit d'une cadence d'émission de 10 Hz. Cette rapidité permet un calcul et un enregistrement en temps réel des temps de vol au cours d'une mission de mesures et d'effectuer un très grand nombre de mesures au cours de ladite mission, ce qui réduit l'erreur statistique sur la détermination des coordonnées des points A.

Les étapes d'un cycle de mesures complet sont illustrées sur le diagramme synoptique de la figure 9.

Lors d'une mission de mesure, ayant pour but par exemple de déterminer avec précision la position des réflecteurs 10 en vue de calculer des subsidences d'un terrain d'exploitation pétrolière ou minière, on connaît bien entendu a priori la position approchée des points surveillés où sont placés les coins de cube 10 (notamment leurs sommets A). Au sol sont également enregistrées, par le récepteur 7 et son antenne 5, des données radioélectriques GPS utiles pour déterminer la position approchée de l'avion 2. On a vu que, au cours du vol de l'avion 2, des données GPS de même nature sont enregistrées par le récepteur 40 et son antenne 42. Ces deux ensembles de données, mesurées de façon synchronisée avec les impulsions émises par la source laser 14, sont traités lors de calculs ultérieurs pour connaître avec une précision de l'ordre du mètre la position de l'avion 2. Ces calculs sont effectués selon des algorithmes de positionnement GPS bien connus de l'homme du métier.

A partir des positions approchées connues des réflecteurs 10, de la position approchée de l'avion 2 pour chaque impulsion ou tir du laser 14 et des données datées stockées dans la mémoire 66, représentant la chronométrie des échos détectés de ladite impulsion, on peut identifier le réflecteur 10 responsable de chacun de ces échos. Cette étape ultérieure des calculs est effectuée en calculant des temps de vol approchés prédits pour chaque position approchée d'avion 2 et chaque position approchée de réflecteur 10 et en comparant l'ensemble desdits temps de vol approchés prédits à l'ensemble des temps de vol mesurés $\Delta t_i$ stockés dans la mémoire 66.

Ayant identifié les réflecteurs correspondant à chaque écho, on obtient, pour chaque tir de laser 14, un ensemble de valeurs de distances entre un point géométrique de référence du dispositif optique 13 et les réflecteurs 10 en multipliant les temps de vol $\Delta t_i$ par la vitesse de la lumière divisée par 2.

Pour en déduire les coordonnées spatiales précises des points A surveillés, on doit effectuer une résolution par optimisation d'un système d'équations ayant un nombre d'équations inférieur à NT et un nombre d'inconnues égal à 3N + 3T où N désigne le nombre de réflecteurs 10 disposés au sol 4 et T le nombre de tirs du laser 14 au cours de la mission de mesure. Chacune de ces équations s'écrit :

$$d(i,t) = \sqrt{[X(i) - x(t)]^2 + [Y(i) - y(t)]^2 + [Z(i) - z(t)]^2}$$

où :

d(i,t) désigne la distance mesurée entre le sommet A du i-ième réflecteur 10 et la position du point géométrique de référence du dispositif optique 13 lors du t-ième tir du laser 14 ($1 \leq i \leq N$, $1 \leq t \leq T$) ;

X(i),Y(i), Z(i) désignent les trois coordonnées spatiales du sommet A du i-ième réflecteur 10 prises dans un référentiel fixe donné ; et

x(t), y(t), z(t) désignent les coordonnées du point géométrique de référence du dispositif optique 13 lors du t-ième tir du laser 14 prises dans le même référentiel fixe.

Lorsqu'on cherche, comme dans le cas de l'application préférée décrite du procédé selon l'invention à déterminer avec précision les coordonnées des points A au sol, on peut d'abord éliminer les 3T inconnues de position du dispositif optique 13 (x(t), y(t), z(t)) et faire porter le calcul d'optimisation sur les inconnues de position des réflecteurs A (X(i), Y(i), Z(i)). L'algorithme de résolution est un algorithme d'optimisation classique (moindres carrés ou analogue) et nécessite néanmoins d'être effectué sur une machine suffisamment puissante pour pouvoir prendre en compte le grand nombre de données mises en jeu, le nombre N pouvant atteindre plusieurs centaines et le nombre T pouvant atteindre plusieurs milliers dans des cycles de mesure typiques.

Grâce au grand nombre de données recueillies et à la précision de la chaîne de détection et de traitement, le procédé selon l'invention donne accès à une précision de mesure remarquable. C'est ainsi que le demandeur a constaté qu'avec un champ divergent pour les impulsions laser ayant un demi-angle au sommet $\alpha$ de 17°, un avion 2 volant à une altitude de 10 000 m et des impulsions laser émises à la cadence de 10 Hz vers des réflecteurs espaces typiquement de 500 m, on obtient une précision typiquement inférieure au millimètre sur les coordonnées des points A, sommets des coins de cube 10;

Ces mesures de précison ont en outre l'avantage d'être éffectuées en un temps court (vol de durée typique 30 minutes), de façon répétitive mais économique. Le matériel est relativement peu coûteux en comparaison des systèmes de la technique antérieure. En outre, la fiabilité et la simplicité d'utilisation sont largement améliorées car aucun mécanisme de visée des réflecteurs-cibles n'est nécessaire.

Dans les méthodes classiques, les télémètres utilisent des lasers collimatés (c'est-à-dire ayant une divergence angulaire de l'ordre du milliradian) conduisant à diriger vers le sol des faisceaux lasers ayant une densité d'énergie au-delà des seuils de sécurité usuels. La présente invention élimine cet inconvénient grâce à la divergence du faisceau laser qui réduit largement cette densité (typiquement d'un facteur 1 000) pour rendre le faisceau totalement inoffensif. Une mission de mesures ne nécessite pas de préparatifs particuliers (par exemple calage de télémètre) et peut donc être répétée de nombreuses fois sans immobiliser l'avion 2.

L'invention a été décrite ci-dessus dans son application préférée à la topographie de haute précision destinée au contrôle du sous-sol. Elle peut bien entendu être utilisée dans le contexte d'études sismiques. En outre, les mesures peuvent être effectuées en plaçant le dispositif optique 13 en un point élevé visible depuis de nombreux réflecteurs 10 et non à bord d'un avion. Dans ce dernier cas, on simplifie avantageusement le traitement en réduisant le nombre d'inconnues car on peut supposer fixe le lieu du dispositif optique 13 et on peut en outre se passer du système auxiliaire de positionnement approché (GPS). Mais, en contrepartie, la flexibilité d'emploi est diminuée.

Dans une autre application possible de l'invention on exploite les données de temps de vol pour calculer avec précision la trajectoire de l'avion 2. Dans ce cas, le système d'équations résolues lors du traitement ultérieur est inversé en faisant porter l'optimisation sur les coordonnées $x(t)$, $y(t)$, $z(t)$ du point géométrique de référence qui est fixe par rapport à l'avion 2.

Bien que, dans la description ci-dessus, on ait représenté à l'invention dans un mode de réalisation préféré donnant accès à une précision inférieure au millimètre, on comprendra que les concepts à la base de cette invention peuvent être appliqués dans de nombreuses variantes sans sortir du domaine de l'invention.

On peut notamment utiliser des composants moins performants (par exemple un photomultiplicateur au lieu de la photodiode 16) si les contraintes de précision ne sont pas aussi sévères que dans l'exemple décrit car l'invention comporte suffisamment d'avantages pour justifier son utilisation dans de nombreuses circonstances où les systèmes de télémétrie classiques ne donnent pas pleinement satisfaction.

## Revendications

1. Procédé pour déterminer les coordonnées spatiales de points (A) grâce à un appareillage optique constitué, d'une part, d'un dispositif optique (13) comprenant une source laser (14) émettant un rayonnement sous forme d'impulsions et un détecteur (16) sensible au rayonnement issu de ladite source laser (14) et, d'autre part, de réflecteurs (10) placés aux points A, le procédé comprenant la répétition des étapes suivantes :

   a) émission en champ large par la source laser (14) d'une impulsion d'un rayonnement divergent ;
   b) réception en champ large des impulsions réfléchies par les différents réflecteurs (10) ;
   c) mesure des temps de vol ($\Delta$ ti) séparant l'émission d'une impulsion de la réception par le détecteur (16) des impulsions réfléchies ;
      ledit procédé étant caractérisé en ce qu'il comprend en outre l'étape suivante :
   d) identification des réflecteurs responsables des impulsions réfléchies grâce à la connaissance préalable de leurs positions approchées.

2. Procédé conforme à la revendication 1, caractérisé en ce que le champ angulaire (8) du rayonnement laser divergent émis a un demi-angle au sommet ($\alpha$) compris entre 5° et 35°.

3. Procédé conforme à l'une des revendications 1 ou 2, caractérisé en ce qu'on évalue au préalable les coordonnées spatiales approchées du dispositif optique (13), par un système de positionnement auxiliaire tel qu'un système radio-électrique (6, 40, 42).

4. Procédé conforme à l'une des revendications 1 à 3, caractérisé en ce qu'on prélève une fraction de l'impulsion laser émise par la source laser (14) avant de faire diverger ladite impulsion laser, pour acheminer ladite fraction vers le détecteur (16) de façon à délivrer une référence de temps de vol ($t_o$).

5. Procédé conforme à l'une des revendications 1 à 3 caractérisé en ce qu'on amplifie le signal de sortie du détecteur (16), représentatif de l'intensité lumineuse recueillie par le détecteur (16) et en ce qu'on échantillonne numériquement le signal amplifié.

6. Procédé conforme à la revendication 5, caractérisé en ce que la fréquence d'échantillonnage numérique du signal de sortie amplifié du détecteur (16) est supérieure à 1 gigahertz.

7. Procédé conforme à l'une des revendications 5 ou 6, caractérisé en ce qu'on prélève une fraction de l'impulsion laser émise par la source laser (14) avant de faire diverger ladite impulsion laser, pour acheminer ladite fraction vers le détecteur (16) de façon à délivrer une référence de temps de vol ($t_o$), en ce

qu'on traite le signal de sortie du détecteur (16), amplifié et échantillonné, pour identifier les pics ($P_i$) dudit signal de sortie correspondant à la réflexion de l'impulsion laser sur un réflecteur (10) et pour déterminer les temps de vol ($\Delta t_i$) correspondant aux intervalles de temps ($t_i$-$t_o$) entre ladite référence de temps de vol ($t_o$) et l'instant ($t_i$) d'apparition desdits pics ($P_i$), et en ce qu'on enregistre en mémoire (66) un ensemble de valeurs représentant lesdits temps de vol ($\Delta t_i$).

8. Procédé conforme à la revendication 7, caractérisé en ce que l'étape de traitement du signal amplifié et échantillonné et l'étape d'enregistrement en mémoire (66) sont effectuées pendant la période séparant deux émissions successives d'impulsions par la source laser (14).

9. Procédé conforme à l'une des revendications 7 ou 8, caractérisé en ce que l'étape de traitement du signal amplifié et échantillonné comprend une étape de validation des pics ($P_i$) du signal de sortie amplifié et échantillonné, pour éliminer les pics ayant une largeur temporelle dépassant un seuil déterminé en fonction de la durée de l'impulsion émise par la source laser (14).

10. Procédé conforme à l'une des revendications 1 à 8, caractérisé en ce que le dispositif optique (13) est installé à bord d'un aéronef (2).

11. Procédé conforme à l'une des revendications 1 à 9, caractérisé en ce que chaque réflecteur (10) est solidaire d'une structure (46) ancrée dans le sol (4).

12. Procédé conforme à l'une des revendications 1 à 11, caractérisé en ce que les temps de vol mesurés ($\Delta t_i$) des impulsions laser sont exploités pour déterminer avec précision les coordonnées spatiales des points (A) où sont placés les réflecteurs (10).

13. Application du procédé conforme à la revendication 12 à la topographie de haute précision, caractérisée en ce que les réflecteurs (10) sont installés au voisinage d'une zone d'extraction de ressources géologiques, les coordonnées spatiales déterminées des points (A) répartis sur ladite zone fournissant des informations sur les subsidences dans ladite zone.

14. Dispositif pour déterminer les coordonnées spatiales de points (A) selon le procédé conforme à l'une des revendications 1 à 12, comprenant :

- un dispositif optique (13) incluant une source laser (14) émettant un rayonnement sous forme impulsionnelle, un détecteur (16) sensible au rayonnement issu de ladite source laser (14), et des moyens (30) de réception, ou collecteurs de lumière, en champ large des impulsions réfléchies, disposés devant le détecteur (16) pour lui transmettre les impulsions recueillies et des moyens optiques divergents (26, 28) pour faire diverger le rayonnement émis par la source laser (14);

- des réflecteurs placés aux points (A) (10) réfléchissant les impulsions émises ;

- des moyens (34, 36, 68) de traitement du signal de sortie du détecteur (16) comprenant des moyens de mesure des temps de vol ($\Delta ti$) séparant l'émission d'une impulsion de la réception par le détecteur (16) des impulsions réfléchies,

caractérisé en ce que le dispositif comporte en outre des moyens d'identification des réflecteurs responsables des impulsions réfléchies grâce à la connaissance préalable de leurs positions approchées.

15. Dispositif conforme à la revendication 14, caractérisé en ce que les moyens optiques divergents (26, 28) comprennent au moins une lentille plan-concave (26, 28).

16. Dispositif conforme à l'une des revendications 14 ou 15, caractérisé en ce que les moyens optiques divergents (26, 28) produisent un faisceau à champ angulaire élargi (8) ayant un demi-angle au sommet ($\alpha$) compris entre 5° et 35°.

17. Dispositif conforme à l'une des revendications 14 à 16, caractérisé en ce que la source laser (14) délivre des impulsions de durée inférieure à 50 ns.

18. Dispositif conforme à l'une des revendications 14 à 17, caractérisé en ce que le collecteur de lumière en champ large (30) comprend une lentille sphérique (30).

19. Dispositif conforme à l'une des revendications 14 à 18, caractérisé en ce que le détecteur (16) comprend une photodiode PIN (16).

20. Dispositif conforme à la revendication 19, caractérisé en ce que la photodiode PIN (16) a une surface sensible (17) d'aire supérieure à 10 mm$^2$.

21. Dispositif conforme à la revendication 18, caractérisé en ce que la surface sensible (17) du détecteur (16) est disposée sensiblement tangente à la sphère focale (C) de la lentille sphérique (30).

22. Dispositif conforme à l'une des revendications 14 à 21, caractérisé en ce que le dispositif optique (13) comprend en outre un miroir diélectrique (22) qui dirige le rayonnement issu de la source laser (14) vers les moyens optiques divergents (26, 28) et un segment de fibre optique (24) s'étendant entre la face arrière du miroir diélectrique (22) et le détecteur (16) pour prélever et acheminer vers le détecteur (16) une fraction du rayonnement issu de la source laser (14), ladite fraction étant extraite de la perte en transmission du miroir diélectrique (22).

23. Dispositif conforme à l'une des revendications 14 à 22, caractérisé en ce que le dispositif optique (13) est situé à bord d'un aéronef (2).

24. Dispositif conforme à la revendication 23, caractérisé en ce qu'il comprend en outre des moyens pour évaluer approximativement les coordonnées spatiales de l'aéronef (2), tels qu'un système de positionnement radio-électrique (6, 40, 42).

25. Dispositif conforme à l'une des revendications 14 à 24, caractérisé en ce que chaque réflecteur (10) est un réflecteur du type coin de cube dont le sommet définit un point (A) dont on détermine les coordonnées spatiales.

26. Dispositif conforme à l'une des revendications 14 à 25, caractérisé en ce que chaque réflecteur (10) est solidaire d'une structure (46) ancrée dans le sol (4).

27. Dispositif conforme à la revendication 26, caractérisé en ce que la structure (46) ancrée dans le sol (4) comprend un pilier (52), sensiblement vertical, au sommet duquel est placé le réflecteur (10).

28. Dispositif conforme à l'une des revendications 26 ou 27, caractérisé en ce qu'une vitre (54) à faces parallèles est placée au-dessus de chaque réflecteur (10), cette vitre (54) étant inclinée par rapport à un plan horizontal ($P_H$).

29. Dispositif conforme à l'une des revendications 14 à 28, caractérisé en ce que les moyens de traitement du signal de sortie du détecteur (16) comprennent un amplificateur (34), un échantillonneur numérique (36) qui échantillonne le signal amplifié par l'amplificateur (34) pour le transformer en données d'histogramme qu'il stocke dans une mémoire tampon (37) et un microprocesseur (68) qui lit les données d'histogramme stockées dans la mémoire tampon (37), exécute un calcul des temps de vol ($\Delta t_i$) des impulsions réfléchies et enregistre dans une mémoire (66) un ensemble de valeurs représentant lesdits temps de vol ($\Delta t_i$).

30. Dispositif conforme à la revendication 29, caractérisé en ce que l'amplificateur (34) a une bande passante dont la limite supérieure est inférieure à 50 MHz.

31. Dispositif conforme à la revendication 19, caractérisé en ce que la photodiode PIN (16) est alimentée en polarisation inverse par une alimentation électrique (62) et en ce qu'une résistance de charge (64) est montée en parallèle de la branche de circuit comprenant l'alimentation (62) et la photodiode PIN (16).

32. Dispositif conforme à la revendication 29, caractérisé en ce que l'échantillonneur numérique (36) a une fréquence d'échantillonnage supérieure à 1 gigahertz.

**Patentansprüche**

1. Verfahren zur Bestimmung der Raumkoordinaten von Punkten (A) mit Hilfe eines optischen Geräts, bestehend erstens aus einer optischen Vorrichtung (13) mit einer Laserquelle (14), die Strahlung in Form von Impulsen abgibt und mit einem für die Strahlen der genannten Laserquelle empfänglichen Detektor (16) und zweitens aus Reflektoren (10) an den Punkten (A), wobei das Verfahren aus der Wiederholung folgender Phasen besteht:

a) Aussendung von Streuimpulsen in einem breiten Feld durch die Laserquelle (14);
b) Empfang der von den verschiedenen Reflektoren (10) zurückgeworfenen Impulse in einem breiten Feld;
c) Messung der Flugzeit ($\Delta$ ti), die die Aussendung eines Impulses vom Empfang der zurückgeworfenen Impulse durch den Detektor (16) trennt;
Das genannte Verfahren ist dadurch gekennzeichnet, daß es auerdem die folgende Phase enthält:
d) Identifikation der Reflektoren, die die jeweiligen Impulse zurückgeworfen haben, dank der vorherigen Kenntnis ihrer annähernden Positionen.

2. Verfahren nach Anspruch 1, dadurch gekennzeichnet, daß das Winkelfeld (8) der ausgesendeten Laserstreustrahlung einen halben Scheitelwinkel ($\alpha$) hat, der zwischen 5° und 35° liegt.

3. Verfahren nach einem der Ansprüche 1 oder 2, dadurch gekennzeichnet, daß die annähernden Raumkoordinaten der optischen Vorrichtung (13) im vorhinein durch ein Hilfspositioniersystem, wie zum Beispiel ein Funksystem (6, 40, 42), abgeschätzt werden.

4. Verfahren nach einem der Ansprüche 1 bis 3, dadurch gekennzeichnet, daß ein Bruchteil des von der Laserquelle (14) ausgesandten Laserimpulses entnommen wird, bevor dieser Laserimpuls gestreut wird, damit der genannte Bruchteil zum Detektor (16) geführt werden und dieser eine Vergleichsflugzeit (to) angeben kann.

5. Verfahren nach einem der Ansprüche 1 bis 3, dadurch gekennzeichnet, daß das Ausgangssignal des Detektors (16), das für die vom Detektor aufgenommene Lichtstärke kennzeichnend ist, verstärkt wird und daß das verstärkte Signal digital abgetastet wird.

6. Verfahren nach Anspruch 5, dadurch gekennzeichnet, daß die digitale Abtastfrequenz des verstärkten Ausgangssignals des Detektors (16) höher als 1 Gigahertz ist.

7. Verfahren nach einem der Ansprüche 5 oder 6, dadurch gekennzeichnet, daß ein Bruchteil des von der Laserquelle (14) ausgesendeten Laserimpulses entnommen wird, bevor dieser Laserimpuls gestreut wird, damit der genannte Bruchteil zum Detektor (16) geführt werden und dieser eine Vergleichsflugzeit (to) angeben kann, daß das verstärkte und abgetastete Ausgangssignal des Detektors (16) verarbeitet wird, um die Spitzen (Pi) des genannten Ausgangssignals zu identifizieren, die der Rücksendung des Laserimpulses auf einem Reflektor (10) entsprechen und um die Flugzeiten zu bestimmen (Δ ti) die den Zeitabständen (ti - to) zwischen der genannten Vergleichsflugzeit (to) und dem Zeitpunkt (ti) des Auftretens der genannten Spitzen (Pi) entsprechen, weiters gekennzeichnet dadurch, daß im Speicher (66) eine Anzahl von Werten registriert werden, die die genannten Flugzeiten (Δ ti) darstellen.

8. Verfahren nach Anspruch 7, dadurch gekennzeichnet, daß die Phase der Verarbeitung des verstärkten und abgetasteten Signals und die Phase der Speicherung (66) während des Zeitraums durchgeführt werden, der zwei aufeinanderfolgende Impulsaussendungen durch die Laserquelle (14) trennt.

9. Verfahren nach einem der Ansprüche 7 oder 8, dadurch gekennzeichnet, daß die Phase der Verarbeitung des verstärkten und abgetasteten Signals eine Phase der Validierung der Spitzen (Pi) des verstärkten und abgetasteten Ausgangssignals enthält, um Spitzen mit zu groer zeitlicher Breite auzuschlieen, die eine bestimmte Schwelle in Abhängigkeit von der Dauer des von der Laserquelle (14) ausgesandten Impulses überschreiten.

10. Verfahren nach einem der Ansprüche 1 bis 8, dadurch gekennzeichnet, daß die optische Vorrichtung (13) an Bord eines Luftfahrzeuges (2) installiert ist.

11. Verfahren nach einem der Ansprüche 1 bis 9, dadurch gekennzeichnet, daß jeder Reflektor (10) mit einer im Boden (4) verankerten Struktur (46) verbunden ist.

12. Verfahren nach einem der Ansprüche 1 bis 11, dadurch gekennzeichnet, daß die gemessenen Flugzeiten (Δ ti) des Laserimpulse ausgewertet werden, um die Raumkoordinaten der Punkte (A), an denen die Reflektoren (10) angebracht sind, genau zu bestimmen.

13. Anwendung des Verfahrens nach Anspruch 12 auf die Hochpräzisionstopographie, dadurch gekennzeichnet, daß die Reflektoren (10) in der Nähe einer Gewinnungszone geologischer Ressourcen angebracht sind, wobei die bestimmten, über die genannte Zone verteilten Raumkoordinaten der Punkte (A) Informationen über die Bodensenkungen in der genannten Zone liefern.

14. Vorrichtung zur Bestimmung der Raumkoordinaten von Punkten (A) nach dem Verfahren nach einem der Ansprüche 1 bis 12, bestehend aus folgenden Teilen:

- einer optischen Vorrichtung (13), bestehend aus einer Laserquelle (14), welche eine Strahlung im Impulsform aussendet, einem für die Strahlung der genannten Laserquelle (14) empfänglichen Detektor (16) und Empfangsmitteln (30) oder Lichtsammlern im breiten Feld der zurückgeworfenen Impulse, die vor dem Detektor (16) angebracht sind, um ihm die empfangenen Impulse zu übermitteln und optischen Streumitteln (26,28) zur Streuung der von der Laserquelle (14) ausgesandten Strahlung;
- Reflektoren an den Punkten (A), die die ausgestrahlten Impulse zurückwerfen;
- Mittel (34,36,68) zur Verarbeitung des Ausgangssignals des Detektors (16), mit Vorrichtungen zur Messung der Flugzeiten (Δ ti), die die Aussendung eines Impulses vom Empfang der zurückgeworfenen Impulse durch den Detektor trennen,
  dadurch gekennzeichnet, daß die Vorrichtung auerdem Identifikationsmittel der für das Zurückwerfen der Impulse verantwortlichen Reflektoren enthält, dank der vorherigen Kenntnis ihrer annähernden Positionen.

15. Vorrichtung nach Anspruch 14, dadurch gekennzeichnet, daß die optischen Streumittel (26,28) zumindest eine plankonkave Linse (26,28) enthalten.

16. Vorrichtung nach einem der Ansprüche 14 oder 15, dadurch gekennzeichnet, daß die optischen Streumittel (26,28) ein Bündel mit erweitertem Winkelfeld (8) mit einem halben Scheitelwinkel ($\alpha$) zwischen 5° und 35° erzeugen.

17. Vorrichtung nach einem der Ansprüche 14 bis 16, dadurch gekennzeichnet, daß die Laserquelle (14) Impulse ausstrahlt, deren Dauer geringer als 50 ns ist.

18. Vorrichtung nach einem der Ansprüche 14 bis 17, dadurch gekennzeichnet, daß der Lichtsammler im breiten Feld (30) eine kugelförmige Linse (30) enthält.

19. Vorrichtung nach einem der Ansprüche 14 bis 18, dadurch gekennzeichnet, daß der Detektor (16) eine Photodiode PIN (16) enthält.

20. Vorrichtung nach Anspruch 19, dadurch gekennzeichnet, daß die Photodiode PIN (16) eine empfindliche Fläche hat, die gröer als 10 mm$^2$ ist.

21. Vorrichtung nach Anspruch 18, dadurch gekennzeichnet, daß die empfindliche Fläche (17) des Detektors (16) den Fokalbereich (C) etwa tangierend zur kugelförmigen Linse (30) gelagert ist.

22. Vorrichtung nach einem der Ansprüche 14 bis 21, dadurch gekennzeichnet, daß die optische Vorrichtung (13) auerdem einen dielektrischen Spiegel (22), der die von der Laserquelle (14) ausgesandte Strahlung zu den optischen Streumitteln (26,28) hinleitet und ein Glasfasersegment (24), das sich von der Rückseite des dielektrischen Spiegels (22) zum Detektor (16) erstreckt, enthält, um einen Bruchteil der von der Laserquelle ausgestrahlten Strahlung zu entnehmen und zum Detektor (16) zu leiten, wobei der genannte Bruchteil aus dem Übertragungsverlust des dielektrischen Spiegels (22) entnommen wird.

23. Vorrichtung nach einem der Ansprüche 11 bis 22, dadurch gekennzeichnet, daß sich die optische Vorrichtung (13) an Bord eines Luftfahrzeuges (2) befindet.

24. Vorrichtung nach Anspruch 23, dadurch gekennzeichnet, daß sie auerdem Mittel zur ungefähren Abschätzung der Raumkoordinaten des Luftfahrzeuges (2) enthält, wie zum Beispiel ein Funkpositionssystem (6,40,42).

25. Vorrichtung nach einem der Ansprüche 14 bis 24, dadurch gekennzeichnet, daß jeder Reflektor (10) ein Reflektor des Typs Kubuswinkel ist, dessen Scheitel einen Punkt (A) definiert, dessen Raumkoordinaten bestimmt werden.

26. Vorrichtung nach einem der Ansprüche 14 bis 25, dadurch gekennzeichnet, daß jeder Reflektor (10) mit einer im Boden (4) verankerten Struktur (46) verbunden ist.

27. Vorrichtung nach Anspruch 26, dadurch gekennzeichnet, daß die im Boden (4) verankerte Struktur (46) einen etwa vertikalen Pfeiler (52) enthält, an dessen Spitze der Reflektor (10) angebracht ist.

28. Vorrichtung nach einem der Ansprüche 26 oder 27, dadurch gekennzeichnet, daß eine Glasscheibe (54) mit parallelen Seitenflächen oberhalb jedes Reflektors (10) angebracht wird, wobei diese Glasscheibe (54) gegenüber einer waagrechten Ebene schräg liegt (PH).

29. Vorrichtung nach einem der Ansprüche 14 bis 28, dadurch gekennzeichnet, daß die Verarbeitungsmittel des Ausgangssignals des Detektors (16) einen Verstärker (34), einen digitalen Abtaster (36), der das durch den Verstärker verstärkte Signal abtastet, um es in Histogrammdaten umzuwandeln, die er in einem Pufferspeicher (37) speichert sowie einen Mikroprozessor (68) enthält, der die im Pufferspeicher (37) gespeicherten Histogrammdaten abliest, eine Berechnung der Flugzeiten ($\Delta$ ti) der zurückgeworfenen Impulse anstellt und in einem Speicher (66) alle Werte darstellt, die für die genannten Flugzeiten ($\Delta$ ti) kennzeichnend sind.

30. Vorrichtung nach Anspruch 29, dadurch gekennzeichnet, daß der Verstärker (34) einen Bandpaßfrequenz aufweist, dessen obere Grenze unter 50 MHz liegt.

31. Vorrichtung nach Anspruch 19, dadurch gekennzeichnet, daß die Photodiode PIN (16) durch Stromversorgung (62) mit Sperrvorspannung gespeist wird und daß ein Ladewiderstand (64) parallel zum Stromkreiszweig geschaltet ist, der die Stromversorgung (62) und die Photodiode PIN (16) enthält.

32. Vorrichtung nach Anspruch 29, dadurch gekennzeichnet, daß die digitale Abtastung (36) eine Abtastfrequenz hat, die höher als 1 Gigahertz ist.

**Claims**

1. A method for defining the space coordinates of points (A) thanks to optical equipment consisting, on the one hand, of an optical device (13) comprising a laser source (14) emitting a laser radiation in the form of pulses and a detector (16) sensitive to the radiation emitted by said laser source (14) and, on the other hand, reflectors (10) positioned at points (A), the method comprising the following steps, to be repeated :

    a) wide-field emission of a pulse of a divergent radiation by the laser source (14) ;
    b) wide-field reception of pulses reflected by the various reflectors (10) ;
    c) measurement of the times of flight ($\Delta t_i$) between the emission of a pulse and the reception of reflected pulses by the detector (16) :
        said method being characterised in that it further comprises the following step :
    d) identification of the reflectors from which the reflected pulses are originating thanks to the previous knowledge of their approximate positions.

2. A method according to claim 1, characterised in that the image angle (8) of the emitted divergent laser radiation has a half vertical angle ($\alpha$) ranging from 5° to 35°.

3. A method according to one of claims 1 or 2, characterised in that the approximate space coordinates of the optical device (13) are previously estimated by means of an auxiliary positioning system such as a radioelectric system (6, 40, 42).

4. A method according to one of claims 1 to 3, characterised in that a fraction of the laser pulse emitted by the laser source (14) is drawn prior to making said laser pulse diverge, for routing said fraction towards the detector (16) so as to deliver a time of flight reference ($t_o$).

5. A method according to one of claims 1 to 3, characterised in that the detector (16) output signal, which is representative of the intensity of light received by the detector (16) is amplified and in that the amplified signal is digitally sampled.

6. A method according to claim 5, characterised in that the frequency of the digital sampling of the amplified output signal from the detector (16) exceeds 1 gigahertz.

7. A method according to one of claims 5 or 6, characterised in that a fraction of the laser pulse emitted by the laser source (14) is drawn prior to making said laser pulse diverge, for routing said fraction towards the detector (16) so as to deliver a time of flight reference ($t_o$), in that the detector (16) amplified and sampled output signal is processed for identifying the peaks ($P_i$) of said output signal corresponding to the reflection of the laser pulse on a reflector (10) and for defining the times of flight ($\Delta t_i$) corresponding to the time intervals ($t_i$-$t_o$) between said time of flight reference ($t_o$) and the instant ($t_i$) when said peaks ($P_i$) appear and in that a set of values representing said times of flight ($\Delta t_i$) is stored in a memory (66).

8. A method according to claim 7, characterised in that the amplified and sampled signal processing step and the storing step in a memory (66) are carried out during the period between two successive emissions of pulses by the laser source (14).

9. A method according to one of claims 7 or 8, characterised in that the amplified and sampled signal processing step comprises a step of validation of amplified and sampled output signal peaks ($P_i$), for eliminating the peaks whose duration in time exceeds a predetermined threshold with respect to the duration of the pulse emitted by the laser source (14).

10. A method according to one of claims 1 to 8, characterised in that the optical device (13) is installed aboard an aircraft (2).

11. A method according to one of claims 1 to 9, characterised in that each reflector (10) is bound up with a ground-anchored (4) structure (46).

12. A method according to one of claims 1 to 11, characterised in that the measured times of flight ($\Delta t_i$) of the laser pulses are used for accurately determining the space coordinates of points (A) where the reflectors (10) are located.

13. Application of the method according to claim 12 to high-precision topography, characterised in that the reflectors (10) are installed near a geological resources extraction area, the determined space coordinates of points (A) distributed over said area giving information on the subsidence in said area.

14. A device for determining the space coordinates of points (A) according to the method according to one of claims 1 to 12, comprising :

- an optical device (13) including a laser source (14) emitting a radiation in the form of pulses, a detector (16) sensitive to the radiation emitted by said laser source (14), and reception means (30), or wide-field light collectors of reflected pulses, positioned in front of the detector (16) for sending it the collected pulses and divergent optical means (26, 28) for making the radiation emitted by the laser source (14) diverge ;
- reflectors (10) positioned at points (A) which reflect the emitted pulses ;
- detector (16) output signal processing means (34, 36, 68) comprising means for measuring times of flight ($\Delta t_i$) between the emission of a pulse and the reception of reflected pulses by the detector (16),

characterised in that the device further comprises means for identifying the reflectors from which the reflected pulses are originating thanks to the previous knowledge of their approximate positions.

15. A device according to claim 14, characterised in that the divergent optical means (26, 28) comprise at least one plano-concave lens (26, 28).

16. A device according to one of claims 14 or 15, characterised in that the divergent optical means (26, 28) produce a beam with an enlarged image angle (8) having a half vertical angle (L) ranging from 5° to 35°.

17. A device according to one of claims 14 to 16, characterised in that the laser source (14) delivers pulses whose duration does not exceed 50 ns.

18. A device according to one of claims 14 to 17, characterised in that the wide-field light collector (30) comprises a spherical lens.

19. A device according to one of claims 14 to 18, characterised in that the detector (16) comprises a PIN photodiode (16).

20. A device according to claim 19, characterised in that the PIN photodiode (16) has a sensitive face (17) larger than 10 mm$^2$.

21. A device according to claim 18, characterised in that the sensitive face (17) of the detector (16) is substantially located tangent to the focal sphere (C) of the spherical lens (30).

22. A device according to one of claims 14 to 21, characterised in that the optical device (13) further comprises a dielectric mirror (22) which directs the radiation emitted by the laser source (14) towards the divergent optical means (26, 28) and a segment of optical fiber (24) extending between the rear face of the dielectric mirror (22) and the detector (16) for sampling and routing a fraction of the radiation emitted by the laser source (14) to the detector (16), said fraction being extracted from the transmission loss of the dielectric mirror (22).

23. A device according to one of claims 14 to 22, characterised in that the optical device (13) is located aboard an aircraft (2).

24. A device according to claim 23, characterised in that it further comprises means for approximately estimating.the space coordinates of the aircraft (2), such as a radioelectric positioning system (6, 40, 42).

25. A device according to one of claims 14 to 24, characterised in that each reflector (10) is of the cube corner type, the vertex of the cube corner defining a point (A) whose space coordinates are determined.

26. A device according to one of claims 14 to 25, characterised in that each reflector (10) is bound up with a ground-anchored (4) structure (46).

27. A device according to claim 26, characterised in that the ground-anchored (4) structure (46) comprises a substantially vertical pillar (52) at the top of which the reflector (10) is positioned.

28. A device according to one of claims 26 or 27, characterised in that a glass (54) having parallel faces is positioned above each reflector (10), the glass (54) slanting with respect to a horizontal plane ($P_H$).

29. A device according to one of claims 14 to 28, characterised in that the detector output processing means (16) comprise an amplifier (34), a digital sampler (36) which samples the signal amplified by the amplifier (34) to transform it into target diagram data which it stores in a buffer memory (37) and a microprocessor (68) which reads the target diagram data stored in the buffer memory (37), calculates the times of flight ($\Delta t_i$) of the reflected pulses and records a set of values representing said times of flight ($\Delta t_i$) in a memory (66).

30. A device according to claim 29, characterised in that the amplifier (34) has a passband, the upper limit of which does not exceed 50 MHz.

31. A device according to claim 19, characterised in that the PIN photodiode (16) is supplied in reverse bias by means of an electric power supply (62) and in that a load resistance (64) is connected in parallel to the circuit branch comprising the power supply (62) and the PIN photodiode (16).

32. A device according to claim 29, characterised in that the digital sampler (36) has a sampling frequency exceeding 1 gigahertz.

FIG_1

FIG_2

FIG.3

FIG.4

FIG.5

FIG.6

FIG_7

LECTURE DANS
MEMOIRE TAMPON

ANALYSE BRUIT DE FOND

DETECTION A SEUIL
MOMENTANE
DES PICS

DETERMINATION
TEMPS DE VOL PAR
BARYCENTRE DES PICS

VALIDATION
/ECHOS MELANGES

ECRITURE DANS MEMOIRE DE MASSE

FIG_8

EP 0 480 832 B1

DONNEES
AU
SOL

| POSITIONS APPROCHEES DES POINTS SURVEILLES |

| DONNEES GPS RECEPTEUR FIXE |

MESURES ET
PRETRAITEMENTS
EN VOL

| CHRONOMETRIE DES ECHOS D'UNE MEME IMPULSION LASER (DONNÉES DATEES) |

| DONNEES GPS RECEPTEUR EMBARQUE |

| POSITION APPROCHEE DE L'AVION |

CALCULS
ULTERIEURS

| IDENTIFICATION DU REFLECTEUR RESPONSABLE DE CHAQUE ECHO |

| POUR CHAQUE TIR DISTANCES PAR RAPPORT AUX REFLECTEURS |

| DETERMINATION PRECISE DE LA POSITION DE L'AVION |

| DETERMINATION PRECISE DES POSITIONS DES REFLECTEURS |

FIG.9

Intensité lumineuse recueillie

$\Delta t_i$

$P_i$

$t_0$   $t_i$   Temps

FIG.10

Signal détecté et échantillonné

Temps

FIG.11